# EUROPEAN PATENT SPECIFICATION

(11) **EP 4 033 119 B1**
(45) Date of publication and mention of the grant of the patent: **29.03.2023**
(21) Application number: 21382050.9
(22) Date of filing: 21.01.2021
(51) Int. Cl.: F16G 13/12, B63B 21/20, F16G 15/12

(54) **MARINE ANCHOR CHAIN**
SCHIFFSANKERKETTE
CHAÎNE D'ANCRAGE MARINE

(43) Date of publication of application: 27.07.2022
(73) Proprietor: Tecnologica Leioa Aie, 28006 Madrid (ES)
(72) Inventor: MENA CORMENZANA, Alexander, 48940 LEIOA (ES); ABRISKETA LOZANO, Nagore, 48940 LEIOA (ES); FERNÁNDEZ IBÁÑEZ, Jonathan, 48940 LEIOA (ES); DÍEZ MATEOS, Mikel, 48940 LEIOA (ES); MANJÓN CASTILLA, Jon Ander, 48940 LEIOA (ES); FERNÁNDEZ BARCO, Silvia, 48940 LEIOA (ES)
(74) Representative: Igartua, Ismael

(56) References cited:
- EP-A1- 3 060 464
- US-A- 5 956 936

## Description

### TECHNICAL FIELD

The present invention relates to marine anchor chains, and mainly to marine anchor chains for floating structures for renewable energies.

### PRIOR ART

Floating structures, such as the offshore wind platforms, for example, require being anchored to the seabed so as not to be subjected to displacements that can be caused by sea currents or weather conditions. To that end, marine anchor chains attaching the floating structures to anchoring devices, such as anchors or piles, which are arranged on the seabed are used.

A marine anchor chain comprises a plurality of common links attached to one another. Common links can be stud links or studless links. For attaching common links of the chain to the element to be connected (floating structure, anchoring device, or another chain), the anchor chain generally has at each of its ends an enlarged link, an end link, and an end shackle.

International standard ISO 1704, *"Ships and marine technology* - *Stud-link anchor chains*"*,* standardizes, *inter alia,* the shape, proportions, dimensions, and tolerances of the links of a marine anchor chain. Each of the common stud links has a nominal diameter, a length which is equal to 6 times the nominal diameter, and a width which is equal to 3.6 times the nominal diameter. Enlarged links and end links have a nominal diameter that is greater than common links, in addition to greater width and length; these enlarged dimensions are required for connecting the chain with the element to be connected, as well as for the links to be able to withstand the mechanical stresses of torsion and tension to which they are subjected. In the case of anchor chains with studless links, each of the common studless links has a nominal diameter, a length which is equal to 6 times the nominal diameter, and a width which is equal to 3.35 times the nominal diameter.

For example, patent document WO2013001121A1 or patent document EP3060464A1 discloses a marine anchor chain comprising a plurality of links attached to one another for connecting a floating structure, such as a wind platform, with a seabed anchoring device. The chain comprises a plurality of common links with standardized dimensions as the ones described above.

US5956936A shows a dragline for removing large volumes of material comprising a bucket supported with dragline chains having a plurality of elongated chain links with an increased pitch length compared with a conventional dragline chain link. Each link comprises a pair of U-shaped end portions connected by a pair of parallel leg portions which are connected to each other by two crosswire tie-bars that prevent chain links from collapsing upon one another. The link may have one or more central anti-collapse bars in order to prevent the legs portions from collapsing together in the event that a link strikes hard against the bucket of the dragline. The width of the link is 3,6 times its nominal diameter and the pith is at least 10 times greater than the nominal diameter of the legs.

### DISCLOSURE OF THE INVENTION

The object of the invention is to provide a marine anchor chain, as defined in the claims.

The invention relates to a marine anchor chain comprising a plurality of links attached to one another, each of the links has a nominal diameter, a length, and a width which is equal to 3.35 times the nominal diameter or a width which is equal to 3.6 times the nominal diameter, and wherein the length of each link is between 6.5 and 8.5 times the nominal diameter.

A marine anchor chain having a lower weight and using less material per length of chain compared with an anchor chain with common links, having a length equal to 6 times the nominal diameter, is thereby obtained, while achieving similar mechanical properties. A reduction of at least 8% by weight per meter of chain is achieved, which represents a lower cost and less CO₂ used in manufacturing same, in addition to being able to use equipment for installing the floating structures that is more lightweight and requires less energy to carry out the logistics and the handling of the chain.

These and other advantages and features of the invention will become apparent in view of the figures and detailed description of the invention.

### DESCRIPTION OF THE DRAWINGS

Figure 1 shows a part of a marine anchor chain according to the invention.
Figure 2 shows a studless link of the marine anchor chain of the example of Figure 1.
Figure 3 shows a stud link of a marine anchor chain according to the invention.

### DETAILED DISCLOSURE OF THE INVENTION

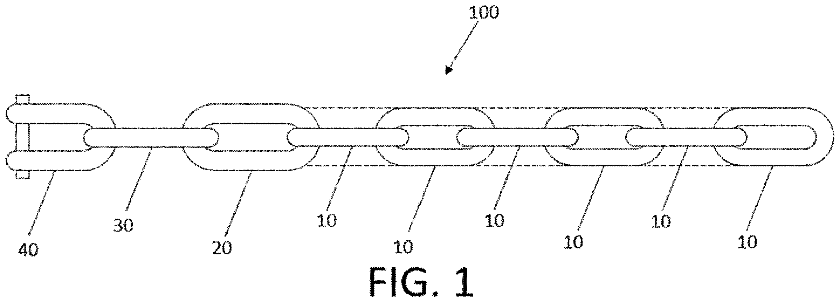

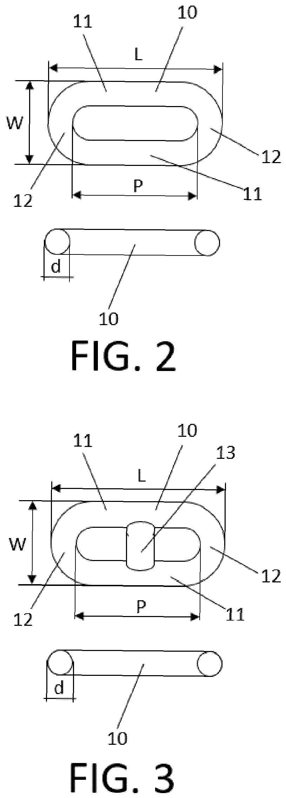

Figure 1 shows a partial view of a marine anchor chain 100 according to the invention. The marine anchor chain 100 comprises a plurality of links 10 attached to one another, each of the links 10 has a nominal diameter d, a length L, and a width W. Arrows are used in Figures 2 and 3 to indicate the dimensions of the nominal diameter d, the length L, and the width W of the links 10, as well as the pitch P.

The links 10 can be studless links, as shown in Figure 2, or stud links, as shown in Figure 3.

According to the invention, the links 10 have a nominal diameter d and a width W according to standard (ISO 1704), i.e., the links 10 have a width W which is equal to 3.35 times the nominal diameter d, when the links are studless links 10, or a width W which is equal to 3.6 times the nominal diameter d, when the links are stud links 10. However, the length L of each link 10 is greater than the length of a common link, which have a length equal to 6 times the nominal diameter according to the standard.

Therefore, according to the invention, the length L of each link 10 of the marine anchor chain 100 is greater than 6.5 times the nominal diameter d, such that the material and the weight are reduced compared with a marine anchor chain with common links. The link 10 is thereby the same as a common link, wherein the diameter and the thickness of the links 10 are not modified with respect to the common links, and only its length L is increased, thereby reducing the weight of the chain 100, but maintaining suitable mechanical properties.

Each end of the marine anchor chain 100 is coupled to an end shackle 40, and between the end shackle 40 and the links 10 there is an enlarged link 20 and an end link 30. The enlarged link 20 is attached at an end of the plurality of links 10, and the end link 30 is attached to the enlarged link 20. It is possible for only one end of the chain 100 to have the enlarged link 20, the end link 30, and the end shackle 40, and even for the chain 100 to be formed only by the plurality of links 10, such that the links 10 are connected directly to an end shackle 40.

One of the ends of the anchor chain 100 is attached to a floating structure and the other end of the chain 100 is attached to a seabed anchoring device. The floating structure is preferably a floating structure for renewable energies, such as an offshore wind-driven power generator.

The enlarged link 20 and the end link 30 have a nominal diameter, a width, and a length that are greater than the links 10. The enlarged link 20 can have a studless or stud geometry. According to the standard, the enlarged link 20 has a nominal diameter D2 which is equal to 1.1 times the nominal diameter d of a link 10, a width which is equal to 3.35 times the nominal diameter D2 if the link is a studless link, or 3.6 times the nominal diameter D2 if the link is a stud link, and a length which is equal to 6 times the nominal diameter D2 for an enlarged link 20 having both a stud and a studless geometry. In the meantime, the end link 30 has a nominal diameter D3 which is equal to 1.2 times the nominal diameter d of a link 10, a width which is equal to 4 times the nominal diameter d, and a length which is equal to 6.75 times the nominal diameter d.

As shown in Figures 2 and 3, the link 10 has an elongated form with two straight cylindrical segments 11 attached to one another by means of two curved cylindrical segments 12. In Figure 3, the two straight cylindrical segments 11 are attached by means of a transverse segment 13. The length L of the link 10 is the distance separating the outer part of the two curved cylindrical segments 12. The pitch P of the link 10 is the distance separating the inner part of the two curved cylindrical segments 12. The width W of the link 10 is the distance separating the outer part of the two straight cylindrical segments 11. The nominal diameter d is the diameter of the straight cylindrical segments 11 and curved cylindrical segments 12. Said nominal diameter d is the diameter of the steel bar that is used in manufacturing the links 10.

Preferably, the length L of each link 10 is between 6.5 and 8.5 times the nominal diameter d. It was experimentally found that with steels of the types that are commonly used in manufacturing anchor chains, for lengths of more than 8.5 times the nominal diameter d, problems may arise during the manufacturing process, since the chain can become too deformed during heat treatment.

The nominal diameter d of each common link 10 of the marine anchor chain 100 is more than 60 mm. The diameter is selected based on the length of the chain and the type of mechanical requirements established for the chain in order to anchor the floating structure.

The links 10 can be covered with protections to reduce degradation due to corrosion, wear, or impacts of another type to which they may be subjected while being used in a marine environment.

The steel of the links 10 can be a steel of the types commonly used in manufacturing marine anchor chains, in such case the link 10 is exactly the same as a common link where only its length L is increased. For example, a steel having a yield strength of more than 400 MPa, a tensile strength of more than 650 MPa, an elongation of more than 12%, and a reduction of area of more than 50% is used for manufacturing links 10 of the chain 100. The toughness of the steel is more than 50 J at the base in tests conducted at -20°C. The breaking load of the links 10 of a chain 100 manufactured with a steel such as those indicated above is more than 3,147 kN.

### Example: Marine anchor chain 100 with links 10 having a length 7.5*d:

A 35-meter chain prototype is manufactured with 85 studless links having a nominal diameter of 76 mm, a width 3.35 times the nominal diameter, i.e., 254.6 mm, a length 7.5 times the nominal diameter, i.e., 570 mm, and a pitch 5.5 times the nominal diameter, i.e., 418 mm.

A steel having a yield strength of 681 MPa, a tensile strength of more than 799 MPa, an elongation of 20.3%, and a reduction of area of 69.8% is used for manufacturing the 85 links. The toughness of the steel is 157 J at the base.

The breaking load is determined by performing ultrasonic testing UT in which the links of the chain are subjected to a tensile strength test under certain conditions and with a load defined by the standard which is held for 30 seconds. The breaking load of the links that is obtained is 5454 KN MPa.

## Claims

1. Marine anchor chain comprising a plurality of links (10) attached to one another, each of the links (10) has a nominal diameter (d), a length (L), and a width (W) which is equal to 3.35 times the nominal diameter (d), or a width (W) which is equal to 3.6 times the nominal diameter (d), **characterized in that** the length (L) of each link (10) is between 6.5 and 8.5 times the nominal diameter (d).

2. Chain according to claim 1, wherein the length (L) of each link (10) is 7.5 times the nominal diameter (d).

3. Chain according to any of the preceding claims, wherein the nominal diameter (d) is more than 60 mm.

4. Chain according to any of the preceding claims, wherein the links (10) are manufactured in a steel having a yield strength of more than 400 MPa, a tensile strength of more than 650 MPa, an elongation of more than 12%, and a reduction of area of more than 50%.

5. Chain according to the preceding claim, wherein the breaking load of the links (10) is more than 3,147 kN.

## Patentansprüche

1. Schiffsankerkette umfassend eine Vielzahl von Gliedern (10), welche miteinander verbunden sind, wobei jedes der Glieder (10) einen Nenndurchmesser (d), eine Länge (L) und eine Breite (W), welche gleich 3,35-mal der Nenndurchmesser (d) ist, oder eine Breite (W), welche gleich 3,6-mal der Nenndurchmesser (d) ist, aufweist, **dadurch gekennzeichnet, dass** die Länge (L) jedes Gliedes (10) zwischen 6,5 und 8,5-mal des Nenndurchmessers (d) liegt.

2. Kette nach Anspruch 1, wobei die Länge (L) jedes Gliedes (10) 7,5-mal der Nenndurchmesser (d) ist.

3. Kette nach einem der vorhergehenden Ansprüche, wobei der Nenndurchmesser (d) von mehr als 60 mm ist.

4. Kette nach einem der vorhergehenden Ansprüche, wobei die Glieder (10) aus einem Stahl mit einer Streckgrenze von mehr als 400 MPa, einer Zugfestigkeit von mehr als 650 MPa, einer Dehnung von mehr als 12% und einer Brucheinschnürung von mehr als 50% hergestellt sind.

5. Kette nach dem vorhergehenden Anspruch, wobei die Bruchlast der Glieder (10) von mehr als 3,147 kN ist.

## Revendications

1. Chaîne d'ancrage marine comprenant une pluralité de maillons (10) reliés les uns aux autres, chacun des maillons (10) a un diamètre nominal (d), une longueur (L) et une largeur (W) qui est égale à 3,35 fois le diamètre nominal (d), ou une largeur (W) qui est égale à 3,6 fois le diamètre nominal (d), **caractérisée en ce que** la longueur (L) de chaque maillon (10) est entre 6,5 et 8,5 fois le diamètre nominal (d).

2. Chaîne selon la revendication 1, dans laquelle la longueur (L) de chaque maillon (10) est 7,5 fois le diamètre nominal (d).

3. Chaîne selon l'une quelconque des revendications précédentes, dans laquelle le diamètre nominal (d) est de plus de 60 mm.

4. Chaîne selon l'une quelconque des revendications précédentes, dans laquelle les maillons (10) sont fabriqués en un acier ayant une limite élastique de plus de 400 MPa, une résistance à la traction de plus de 650 MPa, un allongement de plus de 12%, et une réduction de surface de plus de 50%.

5. Chaîne selon la revendication précédente, dans laquelle la charge de rupture des maillons (10) est de plus de 3 147 kN.
